(19) Europäisches Patentamt
European Patent Office
Office européen des brevets

(11) EP 4 769 617 A2

(12) **EUROPEAN PATENT APPLICATION**

(43) Date of publication:
**01.07.2026 Bulletin 2026/27**

(21) Application number: **25226120.1**

(22) Date of filing: **22.12.2025**

(51) International Patent Classification (IPC):
***H01M 10/0562*** *(2010.01)*

(52) Cooperative Patent Classification (CPC):
**H01M 10/0562;** H01M 2300/0068

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.12.2024 KR 20240199709**

(71) Applicant: **SAMSUNG SDI CO., LTD.**
**Yongin-si, Gyeonggi-do 17084 (KR)**

(72) Inventor: **OH, Daeyang**
**17084 Gyeonggi-do (KR)**

(74) Representative: **Michalski Hüttermann & Partner mbB**
**Kaistraße 16A**
**40221 Düsseldorf (DE)**

(54) **SOLID ELECTROLYTE LAYER, ALL-SOLID-STATE BATTERY INCLUDING THE SAME, AND METHOD FOR MANUFACTURING A SOLID ELECTROLYTE LAYER**

(57) The present disclosure relates to a solid electrolyte layer, an all-solid-state battery including the solid electrolyte layer, and a method for manufacturing the solid electrolyte layer. The solid electrolyte layer includes a sulfide-based solid electrolyte, a binder, and an additive. The additive includes a metal acetylacetonate.

FIG. 1

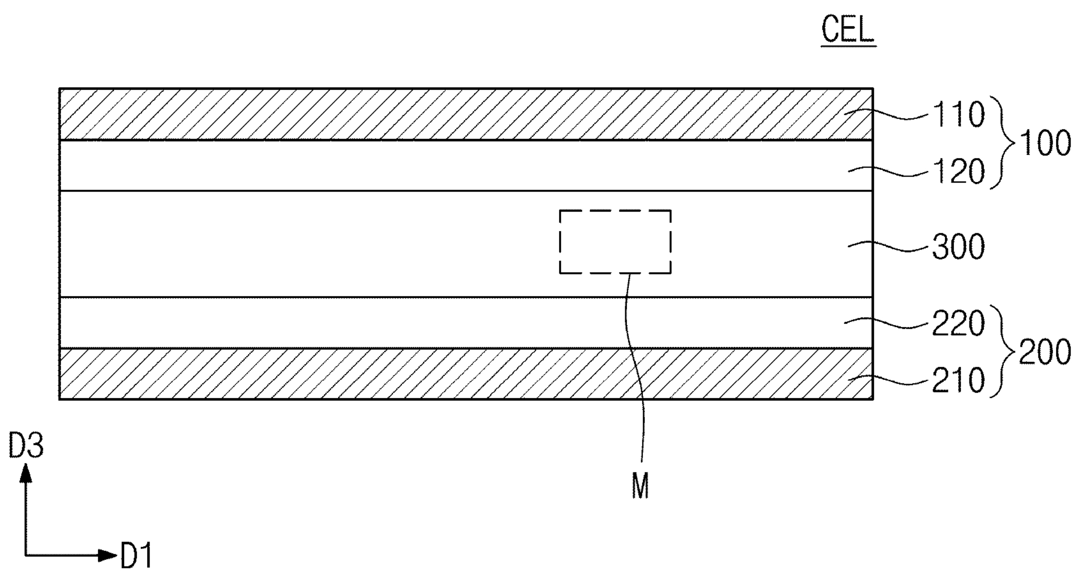


EP 4 769 617 A2

## Description

CROSS-REFERENCE TO RELATED APPLICATION

This application claims priority under 35 U.S.C § 119 to Korean Patent Application No. 10-2024-0199709 filed on December 30, 2024 in the Korean Intellectual Property Office, the disclosure of which is hereby incorporated by reference in its entirety.

BACKGROUND

The present disclosure relates to a solid electrolyte layer, an all-solid-state battery including the solid electrolyte layer, and a method for manufacturing the solid electrolyte layer.

There are active development of high-energy density and safe batteries driven by industrial demands. For example, lithium ion batteries are commercialized not only in formation-related and communication devices, but also in the automotive industry. In the automotive industry, safety is relevant due to the relation thereof to human safety.

There are all-solid-state batteries that include a solid electrolyte in place of a liquid electrolyte. As an all-solid-state battery does not use a flammable organic dispersion medium, the possibility of fire or explosion may be significantly reduced even in the event of short-circuit. Accordingly, an all-solid-state battery may significantly increase safety compared to a lithium ion battery using a liquid electrolyte.

SUMMARY

An example embodiment of the present disclosure includes a solid electrolyte layer having desired or improved electrical characteristics and improved atmospheric stability, and an all-solid-state battery including the solid electrolyte layer.

An example embodiment of the present disclosure includes a method for manufacturing a solid electrolyte layer having desired or improved electrical characteristics and improved atmospheric stability.

According to an example embodiment of the present disclosure, a solid electrolyte layer may include a sulfide-based solid electrolyte, a binder and an additive, wherein the additive may include a metal acetylacetonate.

According to an example embodiment of the present disclosure, an all-solid-state battery may include the solid electrolyte layer, a positive electrode, and a negative electrode, wherein the solid electrolyte layer is disposed between the positive electrode and the negative electrode.

According to an example embodiment of the present disclosure, a method for manufacturing a solid electrolyte layer may include forming a solid electrode slurry by mixing a sulfide-based solid electrolyte, a binder, an additive, and a solvent, coating the solid electrolyte slurry on a substrate, and drying the coated solid electrolyte slurry, wherein the additive may include a metal acetylacetonate.

BRIEF DESCRIPTION OF DRAWINGS

FIG. 1 illustrates a cross-sectional view of an all-solid-state battery according to an example embodiment of the present invention.

FIG. 2 illustrates an enlarged cross-sectional view of an "M" region of FIG. 1 for describing a solid electrolyte layer 300 according to an example embodiment of the present invention.

FIG. 3 illustrates an enlarged cross-sectional view of an "M" region of FIG. 1 for describing a solid electrolyte layer 300 according to a comparative example of the present disclosure.

FIG. 4 illustrates a schematic diagram showing the distribution form of a solid electrolyte SSE and a binder BND in a solid electrolyte layer 300 according to a comparative example of the present disclosure.

FIG. 5 illustrates a schematic diagram showing the distribution form of a solid electrolyte SSE and a binder BND in a solid electrolyte layer 300 according to an example embodiment of the present disclosure.

FIG. 6 illustrates a top view of an all-solid-state battery according to example embodiments of the disclosure.

FIG. 7A illustrates a cross-sectional view taken along line A-A' of FIG. 1.

FIG. 7B illustrates a cross-sectional view taken along line B-B' of FIG. 1.

FIG. 8 illustrates a cross-sectional view taken along line A-A' of FIG. 1, showing an all-solid-state battery according to an example embodiment of the present disclosure.

FIG. 9 illustrates a graph showing the result of the shear viscosity measurement of the solid electrolyte slurry of Example 1 of the present disclosure.

FIG. 10 illustrates a graph showing the result of the shear viscosity measurement of the solid electrolyte slurry of the comparative example of the present disclosure.

FIGS. 11A and 11B respectively illustrate graphs of XPS analysis results for the solid electrolyte powder and the solid electrolyte layer of Example 1 and Comparative Example.

FIG. 12 is a method of manufacturing a solid electrolyte layer, according to an example embodiment.

## DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present therebetween. In the drawings, thicknesses of some components are exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings as examples have general properties, and shapes of regions illustrated in the drawings as examples are used to disclose specific shapes but are not limited to the scope of the present disclosure. It is understood that, although the terms "first," "second," "third," and the like, may be used herein to describe various elements, these elements should not be limited by these terms. These terms are only used to distinguish one element from another element. The example embodiments explained and illustrated herein include complementary embodiments thereof.

The terms in this description are merely used to describe various example embodiments, but are not intended to limit the present disclosure. Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

In this description, each of phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases.

Unless otherwise especially defined in this description, a particle diameter may be an average particle diameter. In addition, a particle diameter indicates an average particle diameter ($D_{50}$) of particles having a cumulative volume of about 50 vol% in particle size distribution. The average particle diameter ($D_{50}$) may be measured by a method known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and an average particle diameter ($D_{50}$) value may be obtained through a calculation. A laser scattering method may also be utilized to measure the average particle diameter ($D_{50}$). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

In an example embodiment, in this description, the average particle diameter may refer to a diameter measured by randomly or non-systematically selecting 100 or more particles from an electron microscope image. Alternatively, in this description, the average particle diameter may be measured using a particle size analyzer, and may refer to a diameter of a particle having a cumulative volume of about 50 vol% in particle size distribution.

When the terms "about" or "substantially" are used in this specification in connection with a numerical value, it is intended that the associated numerical value include a tolerance of $\pm$10% around the stated numerical value. When ranges are specified, the range includes all values therebetween such as increments of 0.1%.

FIG. 1 illustrates a cross-sectional view of an all-solid-state battery according to example embodiments of the disclosure.

Referring to FIG. 1, a unit cell CEL of an all-solid-state battery according to examples of the present disclosure may include a positive electrode layer 100, a negative electrode layer 200 facing the positive electrode layer 100, and a solid electrolyte layer 300 disposed between the positive electrode layer and the negative electrode layer 200. The present disclosure, however, is not limited thereto, and the unit cell CEL may further include an additional functional layer, such as an adhesion enhancement layer, disposed between the positive electrode layer 100 and the solid electrolyte layer 300, or between the negative electrode layer 200 and the solid electrolyte layer 300.

**Positive Electrode Layer 100**

The positive electrode layer 100 according to an example embodiment of the present disclosure may include a positive electrode current collector 110 and a positive electrode active material layer 120 disposed on the positive electrode current collector 110.

The positive electrode current collector 110 may provide a reference surface on which the positive electrode active material layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In another example embodiment of the present disclosure, the positive electrode current collector 110 may not be provided. Although not shown, to increase adhesion between the positive electrode current collector 110 and the positive electrode active material layer 120, a carbon layer having a thickness in a range of $\geq 0.1$ μm to $\leq 4$ μm may further be disposed between the positive electrode current collector 110 and the positive electrode active material layer 120.

**Positive Electrode Active Material Layer 120**

The positive electrode active material layer 120 according to an example embodiment of the present disclosure may include a positive electrode active material and a solid electrolyte.

The positive electrode active material of the positive electrode active material layer 120 may include a material that can reversibly absorb and desorb lithium ions. The positive electrode active material may include a plurality of particles. For example, the positive electrode active material may include at least one of a lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), a nickel sulfide, a copper sulfide, a lithium sulfide, an iron oxide, or a vanadium oxide, but the present disclosure is not limited thereto. The positive electrode active material may be used alone or in a mixture of two or more substances.

The lithium transition metal oxide may be or include, for example, a compound represented by one of $Li_aA_{1-b}B_bD_2$ (where $0.90 \le a \le 1$ and $0 \le b \le 0.5$), $Li_aE_{1-b}B_bO_{2-c}D_c$ (where $0.90 \le a \le 1$, $0 \le b \le 0.5$, and $0 \le c \le 0.05$), $LiE_{2-b}B_bO_{4-c}D_c$ (where $0 \le b \le 0.5$ and $0 \le c \le 0.05$), $Li_aNi_{1-b-c}Co_bB_cD_\alpha$ (where $0.90 \le a \le 1$, $0 \le b \le 0.5$, $0 \le c \le 0.05$, and $0<\alpha<2$), $Li_aNi_{1-b-c}Co_bB_cO_{2-\alpha}F_\alpha$ (where $0.90 \le a \le 1$, $0 \le b \le 0.5$, $0 \le c \le 0.05$, and $0<\alpha<2$), $Li_aNi_{1-b-c}Mn_bB_cD_\alpha$ (where $0.90 \le a \le 1$, $0 \le b \le 0.5$, $0 \le c \le 0.05$, and $0< \alpha \le 2$), $Li_aNi_{1-b-c}Mn_bB_cO_{2-\alpha}F_\alpha$ (where $0.90 \le a \le 1$, $0 \le b \le 0.5$, $0 \le c \le 0.05$, and $0<\alpha<2$), $Li_aNi_bE_cG_dO_2$ (where $0.90 \le a \le 1$, $0 \le b \le 0.9$, $0 \le c \le 0.5$, and $0.001 \le d \le 0.1$), $Li_aNi_bCo_cMn_dG_eO_2$ (where $0.90 \le a \le 1$, $0 \le b \le 0.9$, $0 \le c \le 0.5$, $0 \le d \le 0.5$, and $0.001 \le e \le 0.1$), $Li_aNiG_bO_2$ (where $0.9 \le a \le 1$ and $0.001 \le b \le 0.1$), $Li_aCoG_bO_2$ (where $0.90 \le a \le 1$ and $0.001 \le b \le 0.1$), $Li_aMnG_bO_2$ (where $0.90 \le a \le 1$ and $0.001 \le b \le 0.1$), $Li_aMn_2G_bO_4$ (where $0.90 \le a \le 1$ and $0.001 \le b \le 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \le f \le 2$), $Li_{3-f}Fe_2(PO_4)_3$ (where $0 \le f \le 2$), and $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 (half) of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where $0<x<1, 0<y<1, 0<z<1$, and $x+y+z=1$). When the positive electrode active material includes a ternary lithium transition metal oxide having the layered rock salt type structure, the unit cell CEL may have increased energy density and improved thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method for forming the coating layer may be determined within any methods that do not adversely affect physical characteristics of the positive electrode active material. The method of forming the coating layer may include, for example, spray coating or immersion.

When the positive electrode active material includes nickel (Ni) as a ternary lithium transition metal oxide such as NCA or NCM, a capacity density of the unit cell CEL may increase to reduce metal elution from the positive electrode active material in a charged state. Therefore, the unit cell CEL may improve in cycle characteristics in a charged state. The language "cycle characteristics" may refer to properties that indicate the degree to which the unit cell CEL is degraded due to charge and discharge. For example, the unit cell CEL with high cycle characteristics may degrade less due to charge and discharge, while the unit cell CEL with low cycle characteristics may degrade more due to charge and discharge.

The positive electrode active material may have, for example, a spherical or oval particle shape. There is no limitation on a particle diameter and an amount of the positive electrode active material.

The solid electrolyte of the positive electrode active material layer 120 may have a particle shape. The solid electrolyte may be dispersed between the positive electrode active materials. The solid electrolyte may include a sulfide-based solid electrolyte with desired or improved lithium ionic conductivity. The sulfide-based solid electrolyte may include, for example, at least one of $Li_2S$-$P_2S_5$, $Li_2S$-$P_2S_5$-LiX (where X is or includes a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes at least one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes at least one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof. The sulfide-based solid electrolyte may include, for example, at least one of $Li_{7-x}PS_{6-x}Cl_x(0 \leq x \leq 2)$, $Li_{7-x}PS_{6-x}Br_x(0 \leq x \leq 2)$, $Li_{7-x}PS_{6-x}I_x(0 \leq x \leq 2)$, $Li_{7-y}M1_yPS_{6-z}M2_z(0 \leq y \leq 2, 0 \leq z \leq 2)$, and a combination thereof, wherein M1 is or includes at least one element from Groups 3 to 15 of the Periodic Table, and wherein M2 is or includes at least one element from Group 17 of the Periodic Table.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to hinder or prevent a solid electrolyte layer from short-circuit and penetration caused by the formation of lithium dendrites. The solid electrolyte may have an elastic modulus in a range of, for example, ≥ 15 GPa to ≤ 35 GPa.

The solid electrolyte in the positive electrode active material layer 120 may have an average particle diameter that is less than the average particle diameters of first and second electrolytes in the solid electrolyte layer 300, which is discussed below. For example, the average particle diameter of the solid electrolyte in the positive electrode active material layer 120 may be about equal to or less than about 90%, 80%, 70%, 60%, 50%, 40%, 30%, or 20% of the average particle diameter of a solid electrolyte included in the solid electrolyte layer 300. The average particle diameter may be a median diameter measured with a laser-type particle size distribution analyzer.

The positive electrode active material layer 120 may include a conductive material. The conductive material may have conductivity without causing an undesirable chemical change of the unit cell CEL, and increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may combine the positive electrode active material, the solid electrolyte, and the conductive material together in the positive electrode active material layer 120. The binder may include a material configured to improve adhesion between the positive electrode active material layer 120 and the positive electrode current collector 110. For example, the binder may include at least one of polyvinylidenefluoride, styrene-butadiene rubber (SBR), polytetrafluoroethylene, polyvinylidenefluoride, vinylidenefluoride/hexafluoropropylene copolymer, polyacrylonitrile, and polymethylmethacrylate.

Based on the total 100 parts by weight of the positive electrode active material, the solid electrolyte, the conductive material, and the binder, the positive electrode active material may be included in an amount in a range of ≥ 80 parts by weight to ≤ 92 parts by weight in the positive electrode active material layer 120. Based on the total 100 parts by weight of the positive electrode active material, the solid electrolyte, the conductive material, and the binder, the binder may be included in an amount in a range of ≥ 0.5 parts by weight to ≤ 1.5 parts by weight in the positive electrode active material layer 120.

Based on 100 parts by weight of the solid electrolyte, the conductive material may be included in an amount in a range of ≥ 1 part by weight to ≤ 50 parts by weight in the positive electrode active material layer 120. When the conductive material is included in an amount that is less than about 1 part by weight relative to 100 parts by weight of the solid electrolyte, a proportion of the conductive material may decrease to reduce an electrical conductivity of the positive electrode active material layer 120. When the conductive material is included in an amount that is greater than about 50 parts by weight relative to 100 parts by weight of the solid electrolyte, a proportion of the conductive material may excessively increase and cause incomplete formation of a coating layer that covers a surface of the solid electrolyte.

The positive electrode active material layer 120 may further include an additive, such as a filler, a coating agent, a dispersant, and an ionic conductivity agent, in addition to the positive electrode active material, the solid electrolyte, the conductive material, and the binder.

## Negative Electrode Layer 200

The negative electrode layer 200 may include a negative electrode current collector 210 and a coating layer 220 on the negative electrode current collector 210. The negative electrode current collector 210 may provide a reference surface on which the coating layer 220 is disposed. The negative electrode current collector 210 may include a material that does not react with lithium, for example, a material that does not form an alloy or a compound with lithium. For example, the negative electrode current collector 210 may include at least one of copper (Cu), stainless steel, titanium (Ti), iron (Fe), cobalt (Co), nickel (Ni), and an alloy thereof. For example, a thickness of the negative electrode current collector 210 may range from ≥ 1 μm to ≤ 20 μm, from ≥ 5 μm to ≤ 15 μm, or from ≥ 7 μm to ≤ 10 μm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may not be provided.

## Coating Layer 220

The coating layer 220 may induce growth of lithium metal between the coating layer 220 and the negative electrode current collector 210 when the unit cell CEL is charged. The coating layer 220 may constitute a protection layer for lithium metal, and simultaneously or contemporaneously may reduce or suppress precipitation and growth of lithium dendrites.

The coating layer 220 may include metal and carbon. For example, the coating layer 220 may include at least one metal such as at least one of gold (Au), platinum (Pt), palladium (Pd), silicon (Si), silver (Ag), aluminum (Al), bismuth (Bi), tin (Sn), and zinc (Zn). The coating layer 220 may include at least one carbon such as at least one of carbon black, acetylene black, furnace black, ketjen black, and graphene. In an example embodiment, the coating layer 220 may include a mixture (or composite) of carbon black and silver (Ag).

The coating layer 220 may further include an additive in addition to metal and carbon. The coating layer 220 may include at least one additive such as at least one of, for example, a binder, a filler, a coating agent, a dispersant, and an ionic conductivity agent.

The coating layer 220 may have a thickness that is less than the thickness of the positive electrode active material layer 120. For example, the coating layer 220 may have a thickness that is equal to or less than about 50%, 40%, 30%, 20%, 10%, or 5% of that of the positive electrode active material layer 120. The thickness of the coating layer 220 may range, for example, from ≥ 1 μm to ≤ 100 μm, from ≥ 2 μm to ≤ 80 μm, from ≥ 10 μm to ≤ 50 μm, or from ≥ 5 μm to ≤ 20 μm. When the coating layer 220 has an excessively small thickness, such as, e.g., less than about 1 μm, lithium dendrites formed between the coating layer 220 and the negative electrode current collector 210 may collapse the coating layer 220 to reduce cycle characteristics of the unit cell CEL. When the coating layer 220 has an excessively large thickness, such as, e.g., more than about 100 μm, the unit cell CEL may have a reduced energy density, and an internal resistance of the unit cell CEL may increase due to the coating layer 220, thereby reducing cycle characteristics of the unit cell CEL. Although not shown, a carbon layer may further be included to increase adhesion between the coating layer 220 and the solid electrolyte layer 300.

## Solid Electrolyte Layer 300

The solid electrolyte layer 300 may be provided between the positive electrode layer 100 and the negative electrode layer 200.

FIG. 2 illustrates an enlarged cross-sectional view of section "M" of FIG. 1 for describing a solid electrolyte layer 300 according to an example embodiment of the present disclosure. Referring to FIG. 2, the solid electrolyte layer 300 according to example embodiments of the present disclosure may include a sulfide-based solid electrolyte SSE, a binder BND, and an additive ADT.

The solid electrolyte SSE of the solid electrolyte layer 300 may be the same as, or different from, any one of the materials included in the solid electrolyte in the positive electrode active material layer 120 described above. The solid electrolyte SSE may have a particle shape such as a sphere or an ellipsoid. The solid electrolyte SSE may include a sulfide-based solid electrolyte. The solid electrolyte (SSE) may be amorphous, crystalline, or a mixture thereof. In addition, the solid electrolyte SSE may include, for example, at least one of sulfur (S), phosphorus (P), and lithium (Li) among component elements included in the sulfide-based solid electrolyte mentioned above. For example, the solid electrolyte may be or include a material including $Li_2S$-$P_2S_5$. When $Li_2S$-$P_2S_5$ is utilized as the sulfide-based solid electrolyte material of the solid electrolyte, a mixing molar ratio of $Li_2S$ and $P_2S_5$ may be in a range of about 50:50 to about 90:10.

In an example embodiment, the first solid electrolyte may include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the first solid electrolyte may include an argyrodite-type compound including $Li_{7-a-c}M_aPS_{6-c}X_c$. In the chemical formula above, X may be or include at least one of Cl, Br, or a combination thereof. M may be or include at least one of Na, K, Fe, Mg, Ca, Ag, Cu, Zr, Zn, or a combination thereof. The subscripts "a" and "c" may each be a real number in a range of 0 to 2. The sulfide-based solid electrolyte may include, for example, at least one of $Li_{7-x}PS_{6-x}Cl_x$(where $0 \leq x \leq 2$), $Li_{7-x}PS_{6-x}Br_x$(where $0 \leq x \leq 2$), $Li_{7-x}PS_{6-x}I_x$(where $0 \leq x \leq 2$), $Li_{7-y}M1_yPS_{6-z}M2_z$(where $0 \leq y \leq 2$, and $0 \leq z \leq 2$), and a combination thereof, wherein M1 is or includes at least one element from Groups 3 to 15 of the Periodic Table, and wherein M2 is or includes at least one element from Group 17 of the Periodic Table.

The argyrodite-type solid electrolyte may have a density in a range of $\geq$ 1.5 g/cc to $\leq$ 2.0 g/cc. As the argyrodite-type solid electrolyte has a density equal to or greater than about 1.5 g/cc, it may be possible to decrease an internal resistance of an all-solid-state battery and to hinder or prevent a solid electrolyte layer from short-circuit and penetration caused by the formation of lithium dendrites. The first solid electrolyte may have a modulus in a range of, for example, $\geq$ 15 GPa to $\leq$ 35 GPa.

The binder BND of the solid electrolyte layer 300 may bind the solid electrolyte SSE particles to each other. The binder BND may improve the bonding force between the solid electrolyte layer 300 and the positive electrode 100 or between the solid electrolyte layer 300 and the negative electrode 200, and may improve the mechanical strength and stability of the solid electrolyte layer 300.

The binder BND may include, for example, at least one of an acrylic binder, a fluorine-based binder, a rubber-based binder or a combination thereof. The binder BND may include, for example, at least one of acrylate rubber, acrylonitrile rubber, polyacrylonitrile, polymethylmethacrylate, polymethylacrylate, polyethylacrylate, polyacrylic acid, butyl acrylate, polyvinylidenefluoride, styrene butadiene rubber (SBR), polytetrafluoroethylene, or vinylidenefluoride/-hexafluoropropylene copolymer, polyacryronitrile. In an example embodiment, the binder BND may include an acrylic binder.

The additive ADT in the solid electrolyte layer 300 may improve the dispersibility of the solid electrolyte SSE, the binder BND, and the like. Thus, the additive ADT may improve the electrical characteristics of the solid electrolyte layer 300.

The additive ADT may include, for example, a metal-acetylacetonate. The central metal of the metal-acetylacetonate is not particularly limited as long as the central metal is capable of forming a coordination compound with an acetylacetonate ligand. For example, the central metal of the metal-acetylacetonate may include at least one of aluminum (Al), boron (B), iron (Fe), copper (Cu), nickel (Ni), manganese (Mn), zirconium (Zr), tin (Sn), gallium (Ga), zinc (Zn), chromium (Cr), or a combination thereof. For example, the central metal may include Al (III), Cu (II), Mn (II), Mn(III), Fe (III), Zr (IV), Sn (II), Sn (IV), Cr (III), and the like. In an example embodiment, the central metal of the metal-acetylacetonate may be or include an aluminum cation ($Al^{3+}$).

When the central metal of the metal-acetylacetonate is a divalent cation, two acetylacetonates may participate in the coordination bond. Each acetyl acetonate ligand may form two coordination bonds via two oxygen atoms, and consequently the metal-acetylacetonate may have a square planar structure with four coordination sites.

When the central metal of the metal-acetylacetonate is a trivalent cation, three acetylacetonates may participate in the coordination bond. Each acetyl acetonate ligand may form two coordination bonds via two oxygen atoms, and consequently the metal-acetylacetonate may have an octahedral structure with six coordination sites.

When the central metal of the metal-acetylacetonate is a tetravalent cation, four acetylacetonates may participate in the coordination bond. Each acetyl acetonate ligand may form two coordination bonds via two oxygen atoms, and consequently the metal-acetylacetonate may have an octacoordinate bisphenoid geometry, a distorted square configuration, or the like.

The metal-acetylacetonate may be, for example, but not limited to, aluminum (III) acetylacetonate, copper (II) acetylacetoneate, manganese (II) acetylacetoneate, and manganese (III) acetylacetoneate.

The additive ADT may interact with the sulfide-based solid electrolyte SSE. For example, a force such as a Lewis acid-base interaction, an ion-ion interaction, or an ion-dipole interaction may act between the additive ADT and the sulfide-based solid electrolyte SSE.

For example, the metal cation of the metal acetylacetonate may act as a Lewis acid, and the sulfur anion ($S^{2-}$) of the sulfide-based solid electrolyte SSE may act as a Lewis base, so that there may be a Lewis acid-base interaction between the additive ADT and the sulfide-base solid electrolyte SSE. There may be an ion-ion interaction between the sulfur anion ($S^{2-}$) or lithium cation ($Li^+$) of the sulfide-based solid electrolyte SSE and the metal ion of the metal acetylacetonate. Alternatively, the metal ions and acetylacetone ligands of the metal acetylacetonate, both of which are polar, may interact through ion dipole interactions with the sulfur anion ($S^{2-}$) or lithium cation ($Li^+$) of the sulfide-based solid electrolyte SSE.

The additive ADT may interact with the binder BND. For example, a force such as a Lewis acid-base interaction, an ion-dipole interaction, or a van der Waals force may act between the additive ADT and the binder BND.

For example, a metal ion of the metal acetylacetonate may act as a Lewis acid, and a functional group (for example, a carbonyl group (C=O), a hydroxyl group (-OH), an epoxy group (-O-), or the like) included in the binder BND may act as a Lewis base, so that there may be a Lewis acid-base interaction between the additive ADT and the binder BND. Alternatively, van der Waals forces may exist between the acetylacetone ligand of the metal acetylacetonate and the non-polar part of the binder BND (e.g., the fluorocarbon chain of PVDF).

The additive ADT may interact with at least one of the sulfide-based solid electrolyte SSE and the binder BND to reduce or prevent aggregation of the solid electrolyte SSE with the binder BND. When the aggregation of the solid electrolyte SSE and the binder BND is reduced or suppressed, the phase stability of the solid electrolyte slurry may be improved, and the ion conductivity of the solid electrolyte layer may be improved.

In the solid electrolyte slurry, the solid electrolyte SSE and the binder BND may be aggregated by electrostatic attraction, van der Waals force, interaction with a solvent, or the like. When the solid electrolyte SSE and the binder BND are aggregated, the solid electrolyte SSE and the binder BND may not be uniformly dispersed in the solvent and may form a cluster. The aggregated clusters may reduce the contact area of the solid electrolyte SSE and the binder BND with the solvent, and thereby decrease the particle dispersibility in the slurry. The aggregated clusters may cause the viscosity and rheological properties of the slurry to be non-uniform and reduce the flowability, and thereby decrease the phase stability of the slurry.

The additive ADT according to example embodiments of the present disclosure may interact with at least one of the sulfide-based solid electrolyte SSE and the binder BND, as described above. The additive ADT may be located on the surface of the sulfide-based solid electrolyte SSE to reduce or prevent aggregation of the binder BND and the solid electrolyte. Alternatively, the additive ADT may be positioned around the binder BND to reduce or prevent aggregation of the binder BND and the solid electrolyte. In other words, the additive ADT according to the example embodiments of the present disclosure may interact with at least one of the sulfide-based solid electrolyte SSE and the binder BND to reduce or prevent aggregation of the binder BND and the solid electrolyte SSE. As a result, the additive ADT may improve the dispersibility and phase stability of the solid electrolyte slurry, and thereby improve the electrical characteristics of the prepared solid electrolyte layer 300.

FIG. 3 illustrates a solid electrolyte layer 300 according to a comparative example of the present disclosure, and is an enlarged cross-sectional view of an "M" region in FIG. 1. FIG. 4 is a schematic diagram illustrating a distribution form of a solid electrolyte SSE and a binder BND in a solid electrolyte layer 300 according to a comparative example of the present disclosure.

Referring to FIGS. 3 and 4, in the solid electrolyte layer 300 according to the comparative example, the solid electrolyte SSE and the binder BND may exist in the form of aggregated clusters. When the solid electrolyte SSE and the binder BND aggregate and the binder BND covers the surface of the solid electrolyte SSE or the spaces between the particles of the solid electrolyte SSE, the movement path of lithium ions may be blocked, and thus the ion conductivity of the solid electrolyte layer 300 may be deteriorated.

FIG. 5 is a schematic diagram illustrating a distribution form of a solid electrolyte SSE and a binder BND in a solid electrolyte layer 300 according to an example embodiment of the present disclosure. Referring to FIGS. 2 and 5, in the solid electrolyte layer 300 according to an example embodiment, the solid electrolyte SSE and the binder BND may exist in a substantially evenly dispersed form without being aggregated. When the distribution of the binder BND around the solid electrolyte SSE decreases, the contact area between the solid electrolyte particles SSE increases, and thus the lithium-ion conductivity may be improved.

The solid electrolyte slurry and the solid electrolyte layer 300 include a sulfide-based solid electrolyte SSE which has high reactivity with moisture ($H_2O$) and carbon dioxide ($CO_2$), and thus have relatively low atmospheric stability. The additive ADT may improve the atmospheric stability of the solid electrolyte slurry and solid electrolyte layer 300.

When the chemically stable metal acetylacetonate is located around the sulfide-based solid electrolyte SSE, contact between the sulfide-base solid electrolyte SSE and moisture in the air may be limited. Alternatively, the metal acetylacetonate may adsorb water molecules on the surface of the sulfide-based solid electrolyte SSE, or the ligand structure may inhibit the reaction with moisture, thereby alleviating the moisture reaction of the solid electrolyte SSE. As a result, the metal acetylacetonate may inhibit the sulfide-based solid electrolyte SSE from reacting with moisture in the atmosphere, thereby improving the atmospheric stability of the solid electrolyte slurry and the solid electrolyte layer 300.

The additive ADT may protect the sulfide-based solid electrolyte SSE from atmospheric moisture by Lewis acid-base interaction with the sulfide-based solid electrolyte SSE, but may have little effect on the chemical structure of the sulfide-based solid electrolyte SSE. In other words, the additive ADT can improve the atmospheric stability of the sulfide-based solid electrolyte SSE without deforming the sulfide-based solid electrolyte SSE.

The additive ADT in the manufactured solid electrolyte layer 300 may be identified through Fourier-Transform Infrared Spectroscopy (FT-IR spectroscopy), Time-of-Flight Secondary Ion Mass Spectrometry (TOF-SIMS) analysis, or Gas Chromatography-Mass Spectrometry (GC-MS).

In an example embodiment, the additive ADT may be detected by analyzing a sample collected from the solid electrolyte layer 300 using FT-IR to confirm a characteristic peak of an acetylacetonate ligand (for example, C=O elongation vibration in a region of 1600 to 1500 $cm^{-1}$ ). In another example embodiment, a time-of-flight secondary ion mass spectrometry (TOF-SIMS) analysis method may be used to separately detect metal ions and acetylacetonate ligands from the surface of solid electrolyte layer 300 to directly or indirectly confirm the presence of metal acetylacetonates.

The amount of the additive ADT in the solid electrolyte layer 300 may be in a range of $\geq$ 0.1 parts by weight to $\leq$ 1.5 parts by weight relative to 100 parts by weight of the solid electrolyte layer 300. For example, the amount of the additive ADT may be $\geq$ 0.1 to $\leq$ 1.2 parts by weight, or $\geq$ 0.1 to $\leq$ 1.0 part by weight.

When the amount of the additive ADT in the solid electrolyte layer 300 is too small, e.g., less than about 0.1 parts by weight, it may be difficult to improve the dispersibility and atmospheric stability of the solid electrolyte layer 300. When the amount of the additive ADT in the solid electrolyte layer 300 is too large, e.g., more than about 1.5 parts by weight, the amount of the solid electrolyte SSE may be relatively reduced, and the ionic conductivity of the solid electrolyte layer 300 may be rather reduced. When the amount of the additive ADT satisfies the above-described range, the solid electrolyte layer 300 may have improved atmospheric stability along with ion conductivity.

The weight ratio of the additive ADT and the binder BND in the solid electrolyte layer 300 may be in a range of about 1:0.01 to about 1:0.5. For example, the weight ratio of the additive ADT to the binder BND may be about 1:0.02 to about 1:0.3 or about 1:0.03 to about 1:0.2. When the weight ratio of the additive ADT and the binder BND satisfies the above-described range, the solid electrolyte layer 300 may have desired or improved ion conductivity, and desired or improved durability.

The amount of the sulfide-based solid electrolyte SSE in the solid electrolyte layer 300 may be in a range of about 90 parts by weight or more relative to 100 parts by weight of the solid electrolyte layer 300. For example, the amount of the sulfide-based solid electrolyte SSE may be $\geq$ 90 to $\leq$ 99 parts by weight, $\geq$ 90 to $\leq$ 98 parts by weight, or $\geq$ 90 to $\leq$ 97 parts by weight.

The solid electrolyte layer 300 may further include a filler, a coating agent, a dispersant, an ion conductive auxiliary agent, and the like in addition to the solid electrolyte SSE, the binder BND, and the additive ADT. In an example embodiment, the solid electrolyte layer 300 may further include a dispersant. The dispersant may further improve the dispersibility of the solid electrolyte slurry and reduce the interfacial tension between the solid electrolyte and the solvent to improve the stability of the slurry.

## Method for Manufacturing Solid Electrolyte Layer

A method for manufacturing a solid electrolyte layer according to example embodiments of the present disclosure may include forming a solid electrolyte slurry by mixing a sulfide-based solid electrolyte, a binder, an additive, and a solvent, coating the solid electrolyte slurry on a substrate, and drying the coated solid electrolyte slurry.

The sulfide-based solid electrolyte, the binder, and the additive may be mixed under a solvent to form a solid electrolyte slurry. The solvent may be or include a nonpolar organic solvent or an organic solvent having weak polarity, which has low reactivity with the sulfide-based solid electrolyte. For example, the solvent may include at least one of xylene, benzene, toluene, pentane, hexane, cyclohexane, octyl acetate, nonyl acetate, isobutylisobutyrate (IBIB), or a combination thereof. In one example embodiment the solvent may include octyl acetate.

In the mixing method, any method that can be used by those skilled in the art is possible, and the method is not limited to a specific method.

In one example, the mixing may be performed using a mixer or kneader. In an example embodiment of the present disclosure, mixing may be performed by using a Planetary Disperser mixer, a planetary mixer, a paddle mixer, a ribbon mixer, a dual shaft mixer, a high-speed impeller mixer, or a propeller mixer.

Each of the sulfide-based solid electrolyte, the binder, and the additive may be the same as described above.

For example, the sulfide-based solid electrolyte may include an argyrodite-type compound including, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a-c}M_aPS_{6-c}X_c$ (where $0 \leq a \leq 2$ and $0 \leq c \leq 2$). In the chemical formula above, X may be or include at least one of F, Br, Cl, or a combination thereof. M may be or include at least one of Na, K, Fe, Mg, Ca, Ag, Cu, Zr, Zn, or a combination thereof. Each of "a" and "c" may be a real number in a range of 0 to 2.

The additive may include, for example, a metal acetylacetonate, and a central metal of the metal acetylacetonate may include at least one of aluminum (Al), boron (B), iron (Fe), copper (Cu), nickel (Ni), gallium (Ga), zinc (Zn), chromium (Cr), or a combination thereof.

The binder may include, for example, at least one of acrylate rubber, acrylonitrile rubber, polyacrylonitrile, polymethylmethacrylate, polymethylacrylate, polyethylacrylate, polyacrylic acid, butyl acrylate, polyvinylidenefluoride, styrene butadiene rubber (SBR), polytetrafluoroethylene, or vinylidenefluoride/hexafluoropropylene copolymers.

The solid electrolyte layer 300 may further include a coating agent, a dispersant, an ion conductive auxiliary, and the like. In an example embodiment, the solid electrolyte layer 300 may further include a dispersant.

The additive in the prepared solid electrolyte slurry may interact with at least one of the sulfide-based solid electrolyte and the binder to reduce or prevent aggregation of the binder and the solid electrolyte. As a result, the additive may improve the dispersibility and phase stability of the solid electrolyte slurry. The additive may limit the sulfide-based solid electrolyte from coming into contact with moisture in the air and a solvent to reduce or prevent deterioration of the sulfide-base solid electrolyte.

On the other hand, the additive may have little influence on the chemical structure of the sulfide-based solid electrolyte. In other words, the additive may reduce or prevent deterioration of the sulfide-based solid electrolyte without deforming the sulfide-base solid electrolyte.

The prepared solid electrolyte slurry may be coated on a substrate and dried to form a solid electrolyte layer.

The material used as the substrate is not particularly limited, and may include, for example, at least one of a porous polymer matrix, a release film, a foil, aluminum, or stainless steel (SUS).

The coating may be carried out in a conventional manner. For example, the coating may be performed using a bar coater, a blade coater, or the like. The coating is not limited to the examples described as long as the slurry can be applied.

The drying process may be carried out in a dryer. For example, the dryer may include, but is not limited to, a convection oven, a vacuum oven, and the like.

In the example embodiments to be described below, the technical features overlapping those described above with reference to FIGS. 1 to 5 are not described in detail, and differences are described in detail.

FIG. 6 is a top view of an all-solid-state battery according to example embodiments of the disclosure. FIG. 7A is a cross-sectional view taken along line A-A' in FIG. 6. FIG. 7B is a cross-sectional view taken along line B-B' in FIG. 6.

Referring to FIGS. 6, 7A, and 7B, the solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to a negative electrode layer 200.

The first solid electrolyte layer 310 may include a first solid electrolyte. The second solid electrolyte layer 320 may include a second solid electrolyte. Each of the first and second solid electrolytes may be the same as the sulfide-based solid electrolyte SSE described above with reference to FIG. 2. For example, each of the first and second solid electrolytes may have a particle shape such as a sphere or an ellipsoid. The first and the second solid electrolytes may be amorphous, crystalline, or a mixture thereof.

Each of the first solid electrolyte layer 310 and the second solid electrolyte layer 320 may further include a binder. The binder included in the first and second solid electrolyte layers 310, 320 may be or include, for example, at least one of an acrylate rubber, an acrylonitrile rubber, polyacrylonitrile, polymethylmethacrylate, polymethylacrylate, a polyethylacrylate, a butyl acrylate, a polyacrylic acid, a polyvinylidenefluoride, a styrene butadiene rubber (SBR), a polytetrafluoroethylene, a polyvinylidenefluoride, vinylidenefluoride/hexafluoropropylene copolymer, a or a combination thereof.

Each of the first solid electrolyte layer 310 and the second solid electrolyte layer 320 may further include an additive. Additives may include, for example, a metal acetylacetonate. A central metal of the metal-acetylacetonate is not particularly limited as long as the central metal is a metal capable of forming a complex compound (or coordination compound) with an acetylacetonate ligand. For example, the central metal of the metal-acetylacetonate may include at least one of aluminum (Al), boron (B), iron (Fe), copper (Cu), nickel (Ni), gallium (Ga), zinc (Zn), chromium (Cr), or a combination thereof.

The second solid electrolyte may be in direct contact with the coating layer 220. Thus, the second solid electrolyte can reduce or suppress lithium dendrites formed between the coating layer 220 and the negative electrode current collector 210. The second solid electrolyte may effectively reduce or suppress a negative electrode side reaction. Therefore, the all-solid-state battery according to examples of the present disclosure may improve in cell performance.

The first solid electrolyte layer 310 may have a first thickness TK1, and the second solid electrolyte layer 320 may have a second thickness TK2. The first thickness TK1 and the second thickness TK2 may be the same as or different from each other. In an example embodiment, the first thickness TK1 may be greater than the second thickness TK2. For example, the first thickness TK1 may be about 1.1 to 5 times the second thickness TK2.

Referring again to FIGS. 6, 7A, and 7B, the positive electrode layer 100 and the first solid electrolyte layer 310 may constitute a positive electrode mixture layer CSH. The negative electrode layer 200 and the second solid electrolyte layer 320 may constitute a negative electrode mixture layer ASH. The positive electrode mixture layer CSH may be stacked on the negative electrode mixture layer ASH.

The negative electrode mixture layer ASH and the positive electrode mixture layer CSH may have areas that are different from each other. For example, the area of the negative electrode mixture layer ASH may be greater than the area of the positive electrode mixture layer CSH. The positive electrode mixture layer CSH may be overlapped by the negative electrode mixture layer ASH.

In an example embodiment of the present disclosure, the first solid electrolyte layer 310 may have substantially the same area as the positive electrode layer 100. The second solid electrolyte layer 320 may have substantially the same area as the negative electrode layer 200.

For example, the positive electrode mixture layer CSH may have a first width WI1 in a first direction D1. The negative electrode mixture layer ASH may have a second width WI2 in the first direction D1. The first width WI1 may be less than the second width WI2. The positive electrode mixture layer CSH may have a third width WI3 in a second direction D2. The negative electrode mixture layer ASH may have a fourth width WI4 in the second direction D2. The third width WI3 may be less than the fourth width WI4.

The unit cell CEL according to the example embodiment may be fabricated by forming the negative electrode mixture layer ASH on a first carrier film, forming the positive electrode mixture layer CSH on a second carrier film, and then laminating the negative electrode mixture layer ASH and the positive electrode mixture layer CSH.

The unit cell CEL according to the example embodiment may further include a gasket GSK. The gasket GSK may be provided to surround the positive electrode mixture layer CSH. A difference in area between the negative electrode mixture layer ASH and the positive electrode mixture layer CSH may produce a step difference on a lateral surface of the unit cell CEL, and the gasket GSK may fill the step difference. The gasket GSK may surround four lateral surfaces of the positive electrode mixture layer CSH. For example, a thickness of the gasket GSK may be substantially the same as, or less than, the thickness of the positive electrode mixture layer CSH. In an example embodiment, the positive electrode current collector 110 may reside at a height (or level) higher than the height of the gasket GSK.

The positive electrode current collector 110 may include a positive electrode tab CTB. The positive electrode tab CTB may be a protruding region of the positive electrode current collector 110. In an example embodiment, the positive electrode tab CTB may protrude in the second direction D2.

The negative electrode current collector 210 may include a negative electrode tab ATB. The negative electrode tab ATB may be a protruding region of the negative electrode current collector 210. In an example embodiment, the negative electrode tab ATB may protrude in a direction opposite to the second direction D2.

FIG. 8 is a cross-sectional view taken along line A-A' in FIG. 1 for describing an all-solid-state battery according to another example embodiment of the present disclosure. Referring to FIG. 8, the negative electrode layer 200 of the unit cell CEL may further include a lithium metal layer 400 between the negative electrode current collector 210 and the coating layer 220. The lithium metal layer 400 may have an increased thickness when the unit cell CEL is charged. The coating layer 220 may constitute a protection layer for the lithium metal layer 400 and may simultaneously or contemporaneously reduce or suppress growth of lithium dendrites from the lithium metal layer 400.

The lithium metal layer 400 may be or include a metal thin layer including lithium or lithium alloy. As the lithium metal layer 400 is a metal layer including lithium, the lithium metal layer 400 may constitute, for example, a lithium reservoir. The lithium alloy may be or include, for example, at least one of a Li-Al alloy, Li-Sn alloy, Li-In alloy, Li-Ag alloy, Li-Au alloy, Li-Zn alloy, Li-Ge alloy, or Li-Si alloy, but any suitable lithium alloys may be applicable. The lithium metal layer 400 may be formed of or include lithium, one of the alloys, or several types of the alloys. The lithium metal layer 400 may be, for example, a plated layer. For example, the lithium metal layer 400 may be plated (or deposited) between the coating layer 220 and the negative electrode current collector 210 during charging of the unit cell CEL.

In another example embodiment of the present disclosure, the lithium metal layer 400 in the negative electrode 200 may be provided between the negative electrode current collector 210 and the coating layer 220, for example, before the unit cell CEL is assembled. When the lithium metal layer 400 is disposed between the negative electrode current collector 210 and the coating layer 220 before the unit cell CEL is assembled, the lithium metal layer 400 may be or include a metal layer including lithium and thus constitute a lithium reservoir. For example, before the unit cell CEL is assembled, a lithium foil may be placed between the negative electrode current collector 210 and the coating layer 220.

When the lithium metal layer 400 is deposited by charging after assembling the unit cell CEL, the energy density of the unit cell CEL may be increased because the unit cell CEL does not include the lithium metal layer at the time of assembling. When the unit cell CEL is charged, the charging capacity of the coating layer 220 may be exceeded. That is, the coating layer 220 may be overcharged. In the early stage of charging, lithium may be occluded in the coating layer 220. When charging is performed in excess of the capacity of the coating layer 220, for example, lithium may be deposited between the negative electrode coating layer 220 and the negative electrode current collector 210. The metal layer 400 may be formed by the deposited lithium.

The lithium metal layer 400 may be mainly composed of or include lithium (i.e., metal lithium). During discharge, lithium in the lithium metal layer 400 may be ionized and migrate to the positive electrode 100. In other words, lithium may be used as the negative electrode active material in the unit cell CEL. In addition, because the coating layer 220 covers the lithium metal layer 400, the coating layer 220 may protect the lithium metal layer 400 and reduce or suppress precipitation growth of lithium dendrite. Accordingly, the coating layer 220 may reduce or suppress a short circuit and a decrease in capacity of the unit cell CEL and improve the cycle characteristics of the unit cell.

When the lithium metal layer 400 is formed by charging after assembly of the unit cell CEL, the negative electrode 200 (including the negative electrode current collector 210, the coating layer 220, and a region between them) may be or include a Li-free region that does not include lithium (Li) in an initial state or a state after complete discharge of the unit cell CEL.

The lithium metal layer 400 may have a fifth width WI5 in the first direction D1. The fifth width WI5 may be the same as or greater than the first width WI1. The fifth width WI5 may be the same as or less than the second width WI2. For example, the fifth width WI5 may be greater than the first width WI1 and less than the second width WI2.

The negative electrode 200 may further include a thin layer provided between the negative electrode current collector 210 and the coating layer 220. The thin layer may be provided on one side of the negative electrode current collector 210 to form an alloy with lithium.

The thin layer may include, for example, an element capable of forming an alloy with lithium. The element capable of forming an alloy with lithium may include, for example, at least one of gold, silver, zinc, tin, indium, silicon, aluminum, or bismuth, but the present disclosure is not limited thereto, and any suitable element capable of forming an alloy with lithium in the art may be utilized. The thin layer may be formed of or include one of the metals discussed above or an alloy of various types of metals.

As the thin layer is disposed on one side of the negative electrode current collector 210, a plated shape of the lithium metal layer 400 deposited between the thin layer and the coating layer 220 may be more planarized, and the all-solid-state battery may improve in cycle characteristics.

A thickness of the thin layer may range from, for example, $\geq$ 1 nm to $\leq$ 800 nm, $\geq$ 10 nm to $\leq$ 700 nm, $\geq$ 50 nm to $\leq$ 600 nm, or $\geq$ 100 nm to $\leq$ 500 nm. When the thickness of the thin layer is less than about 1 nm, it may be difficult to achieve performance caused by the thin layer. When the thickness of the thin layer is excessively large, e.g., more than about 800 nm, the thin layer may absorb lithium and reduce a deposition amount of lithium in the negative electrode 200, thereby reducing an energy density and cycle characteristics of the all-solid-state battery. For example, vapor deposition, sputtering, or plating may be employed to form the thin layer on the negative electrode current collector 210, but the present disclosure is not limited thereto, and any suitable methods capable of forming a thin layer in the art may be utilized.

FIG. 12 is a method of manufacturing a solid electrolyte layer, according to an example embodiment. In FIG. 12, the method 1200 includes operation 1210, which includes forming a solid electrolyte slurry by mixing a sulfide-based solid electrolyte, a binder, an additive, and a solvent. For example, the additive includes a metal acetylacetonate. In another example, a central metal of the metal-acetylacetonate includes at least one of aluminum (Al), boron (B), iron (Fe), copper (Cu), nickel (Ni), gallium (Ga), manganese (Mn), zirconium (Zr), tin (Sn), zinc (Zn), chromium (Cr), and a combination thereof. In a further example, the solvent includes at least one of xylene, benzene, toluene, pentane, hexane, cyclohexane, octyl acetate, nonyl acetate, isobutylisobutyrate (IBIB), and a combination thereof. In yet another example, the sulfide-based solid electrolyte includes at least one of $Li_{7-x}PS_{6-x}Cl_x$(where $0 \leq x \leq 2$), $Li_{7-x}PS_{6-x}Br_x$(where $0 \leq x \leq 2$), $Li_{7-x}PS_{6-x}I_x$ (where $0 \leq x \leq 2$), $Li_{7-y}M1_yPS_{6-z}M2_z$(where $0 \leq y \leq 2$, and $0 \leq z \leq 2$), and a combination thereof, wherein M1 includes at least one element from Groups 3 to 15 of the Periodic Table, and M2 includes at least one element from Group 17 of the Periodic Table. In yet other examples, a weight ratio of the binder to the additive in the solid electrolyte slurry is in a range of about 1:0.01 to about 1:0.5. Operation 1220 includes coating the solid electrolyte slurry to a substrate. Operation 1230 includes drying the coated solid electrolyte slurry.

Hereinafter, the present disclosure is discussed below in detail through example embodiments. These example embodiments, however, are provided to illustrate the present disclosure, and the scope of the present disclosure is not limited to these embodiments.

## Embodiment 1

**Preparation of Solid Electrolyte Slurry:**

As a sulfide-based solid electrolyte, an argyrodite-type solid electrolyte ($Li_6PS_5Cl$) powder was prepared. A butyl acrylate-based polymer was prepared as a binder, and polyethylene imine (PEG, Polyethylene glycol) was prepared as a dispersant. Aluminum(III) acetylacetonate was prepared as an additive. A solid electrolyte slurry was prepared by mixing the solid electrolyte powder, the binder, the dispersant and the additives in an octyl acetate solvent (the weight ratio of the solid electrolyte, binder, dispersant and additives was 93.8:5:0.6:0.6).

**Manufacture of Solid Electrolyte Layer:**

The prepared solid electrolyte slurry was applied to a release polytetrafluoroethylene film and dried at 60° C for 2 hours to fabricate a solid electrolyte layer.

**Embodiment 2**

A solid electrolyte slurry was prepared in the same manner as in Embodiment 1, with a difference that the solid electrolyte, the binder, the dispersant, and the additive were mixed in a weight ratio of 94:5:0.6:0.4. Except for this, the solid electrolyte layer was prepared in the same manner as in Embodiment 1.

**Embodiment 3**

A solid electrolyte slurry was prepared in the same manner as in Embodiment 1, with a difference that the solid electrolyte, the binder, the dispersant, and the additive were mixed in a weight ratio of 94.2:5:0.6:0.2. Except for this, the solid electrolyte layer was prepared in the same manner as in Embodiment 1.

**Embodiment 4**

A solid electrolyte slurry was prepared in the same manner as in Embodiment 1, with a difference that the solid electrolyte, the binder, the dispersant, and the additive were mixed in a weight ratio of 93.4:5:0.6:1. Except for this, the solid electrolyte layer was prepared in the same manner as in Embodiment 1.

**Embodiment 5**

A solid electrolyte slurry was prepared in the same manner as in Embodiment 1, with a difference that the solid electrolyte, the binder, the dispersant, and the additive were mixed in a weight ratio of 93.1:5:0.6:1.3. Except for this, the solid electrolyte layer was prepared in the same manner as in Embodiment 1.

**Comparative Example**

A solid electrolyte slurry was prepared in the same manner as in Embodiment 1, with a difference that no additives were added in the preparation of the solid electrolyte slurry, and the solid electrolyte, the binder, and the dispersant were mixed in a weight ratio of 94.4:5:0.6. Except for this, the solid electrolyte layer was prepared in the same manner as in Embodiment 1.

**Evaluation Example 1: Evaluation of Phase Stability of Solid Electrolyte Slurry**

The solid electrolyte slurries prepared according to the Embodiments and Comparative Example were measured for shear viscosity using a rheometer from Anton Paar. The shear viscosity was measured by introducing 10 ml of the solid electrolyte slurry into the instrument.

The phase stability was evaluated by measuring the shear viscosity (viscosity at a shear rate of 10 (1/s)) at room temperature (20°C) immediately after the preparation of the solid electrolyte slurries of Embodiments and Comparative Example and after 1 day of standing without stirring. The results are shown in FIG. 9, FIG. 10, and Table 1 below. The viscosity increase rate was calculated according to the following Equation 1.

Equation 1:

$$\text{Viscosity Increase Rate (\%)} = [(A - B) / B] \times 100.$$

A: shear viscosity after 1 day of standing without stirring
B: shear viscosity immediately after preparation

Table 1:

| Distinction | Additive Amount (wt%) | Slurry viscosity (mPa·s) | | Viscosity Increase Rate (%) |
|---|---|---|---|---|
| | | Immediately after Preparation | 1 day of standing wi thout stirring | |
| Embodiment 1 | 0.6 | 758 | 938 | 24 |
| Embodiment 2 | 0.4 | 833 | 1,135 | 36 |
| Embodiment 3 | 0.2 | 1,040 | 1,627 | 56 |
| Embodiment 4 | 1.0 | 575 | 674 | 17 |
| Embodiment 5 | 1.3 | 499 | 521 | 4 |
| Comparative Example | No Additives | 1,203 | 2,184 | 82 |

Referring to FIG. 9, FIG. 10, and Table 1, it can be seen that the solid electrolyte slurry according to the embodiments has a remarkably small change rate of viscosity after 1 day of standing without stirring as compared with the solid electrolyte slurry of the comparative example.

**Evaluation Example 2: Evaluation of Ionic Conductivity of Solid Electrolyte Layer**

The ionic conductivities of the solid electrolyte layers according to example Embodiments and Comparative Example were measured. The impedance of the solid electrolyte layers was measured using a potentiostat (AUTOLAB PGSTAT30 (Metrohm Autolab Co. Ltd.)), and the ionic conductivity at 25° C was measured from a Nyquist plot. The results are shown in Table 2 below.

Table 2:

| Distinction | Additive Amount (wt%) | Ionic Conductivity (mS/cm) |
|---|---|---|
| Embodiment 1 | 0.6 | 0.58 |
| Embodiment 2 | 0.4 | 0.48 |
| Embodiment 3 | 0.2 | 0.40 |
| Embodiment 4 | 1.0 | 0.5 |
| Embodiment 5 | 1.3 | 0.42 |
| Comparative Example | No Additives | 0.41 |

Referring to Table 2, it can be seen that the solid electrolyte layers according to Embodiments 1 to 5 have equivalent or better ionic conductivity when compared to the solid electrolyte layer according to the comparative example.

**Evaluation Example 3: Evaluation of Solid Electrolyte**

XPS (X-ray Photoelectron Spectroscopy) analysis was performed on the sulfide-based solid electrolyte ($Li_6PS_5Cl$) powder used in Embodiments and Comparative Example, the solid electrolyte layer of Embodiment 1, and the solid electrolyte layer of Comparative Example, and the results are shown in FIG. 11.

Referring to FIG. 11, it can be seen that the solid electrolyte in the solid electrolyte layer of Embodiment 1 has less structural change when compared with the solid electrolyte included in the solid electrolyte layer of Comparative Example.

The solid electrolyte layer according to the present disclosure may have desired or improved electrical characteristics and desired or improved atmospheric stability.

While this disclosure has been described in connection with what is presently considered to be example embodiments, it is to be understood that the present disclosure is not limited to the disclosed example embodiments and is intended to cover various modifications and equivalent arrangements included within the spirit and scope of the appended claims, and therefore the aforementioned example embodiments should be understood to be exemplarily but not limiting this disclosure in any way.

## Claims

**1.** A solid electrolyte layer (300) comprising:

a sulfide-based solid electrolyte;
a binder; and
an additive,
wherein the additive comprises a metal acetylacetonate.

**2.** The solid electrolyte layer (300) of claim 1,
wherein a central metal of the metal-acetylacetonate comprises at least one of aluminum (Al), boron (B), iron (Fe), copper (Cu), nickel (Ni), gallium (Ga), manganese (Mn), zirconium (Zr), tin (Sn), zinc (Zn), chromium (Cr), and a combination thereof.

**3.** The solid electrolyte layer (300) of claim 1 or 2,
wherein an attraction force occurs at least one of (i) between the additive and the sulfide-based solid electrolyte, and (ii) between the additive and the binder.

**4.** The solid electrolyte layer (300) according to any one of claims 1 to 3,
wherein an amount of the additive is in a range of ≥ 0.1 parts by weight to ≤ 1.5 parts by weight relative to 100 parts by weight of the solid electrolyte layer (300).

**5.** The solid electrolyte layer (300) according to any one of claims 1 to 4,
wherein a weight ratio of the binder to the additive is in a range of about 1:0.01 to about 1:0.5.

**6.** The solid electrolyte layer (300) according to any one of claims 1 to 5,
wherein an amount of the sulfide-based solid electrolyte is in a range of ≥ 90 parts by weight to ≤ 99 parts by weight relative to 100 parts by weight of the solid electrolyte layer (300).

**7.** The solid electrolyte layer (300) according to any one of claims 1 to 6,

wherein the sulfide-based solid electrolyte comprises at least one of $Li_{7-x}PS_{6-x}Cl_x$(where $0 \leq x \leq 2$), $Li_{7-x}PS_{6-x}Br_x$ (where $0 \leq x \leq 2$), $Li_{7-x}PS_{6-x}I_x$(where $0 \leq x \leq 2$), $Li_{7-y}M1_yPS_{6-z}M2_z$(where $0 \leq y \leq 2$, and $0 \leq z \leq 2$), and a combination thereof,
wherein M1 comprises at least one element from Groups 3 to 15 of the Periodic Table, and
wherein M2 comprises at least one element from Group 17 of the Periodic Table.

**8.** The solid electrolyte layer (300) according to any one of claims 1 to 7,
wherein the binder comprises at least one of an acrylic binder, a fluorine-based binder, a rubber-based binder, and a combination thereof.

**9.** The solid electrolyte layer (300) according to any one of claims 1 to 8,
wherein the binder comprises at least one of acrylate rubber, acrylo nitrile rubber, polyacrylonitrile, polymethylmethacrylate, butyl acrylate, polymethylacrylate, a polyethylacrylate, a polyacrylic acid, and a combination thereof.

**10.** The solid electrolyte layer (300) according to any one of claims 1 to 9,
wherein the solid electrolyte layer (300) further comprises a dispersant.

**11.** An all-solid-state battery (CEL) comprising:

a solid electrolyte layer (300) as set forth in any one of claims 1 to 10, a positive electrode (100), and a negative electrode (200),
wherein the solid electrolyte layer (300) is disposed between the positive electrode (100) and the negative electrode (200).

**12.** The all-solid-state battery (CEL) of claim 11, wherein the positive electrode (100) comprises a positive electrode active material and a sulfide-based solid electrolyte.

**13.** The all-solid-state battery (CEL) of claim 11 or 12,

wherein the negative electrode (200) comprises a negative electrode current collector (210) and a coating layer (220) on the negative electrode current collector (210), and
wherein the coating layer (220) comprises a carbon-based material and a metal.

**14.** A method of manufacturing a solid electrolyte layer (300), the method comprising:

forming a solid electrolyte slurry by mixing a sulfide-based solid electrolyte, a binder, an additive, and a solvent;
coating the solid electrolyte slurry to a substrate; and
drying the coated solid electrolyte slurry,
wherein the additive comprises a metal acetylacetonate.

**15.** The method of claim 14, wherein a central metal of the metal-acetylacetonate comprises at least one of aluminum (Al), boron (B), iron (Fe), copper (Cu), nickel (Ni), gallium (Ga), manganese (Mn), zirconium (Zr), tin (Sn), zinc (Zn), chromium (Cr), and a combination thereof.

FIG. 1

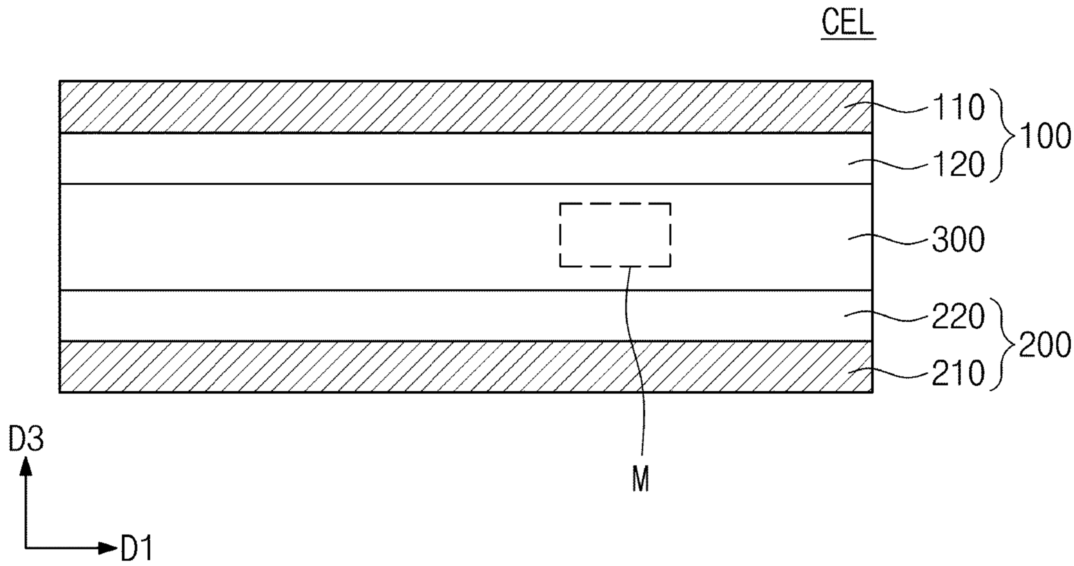

FIG. 2

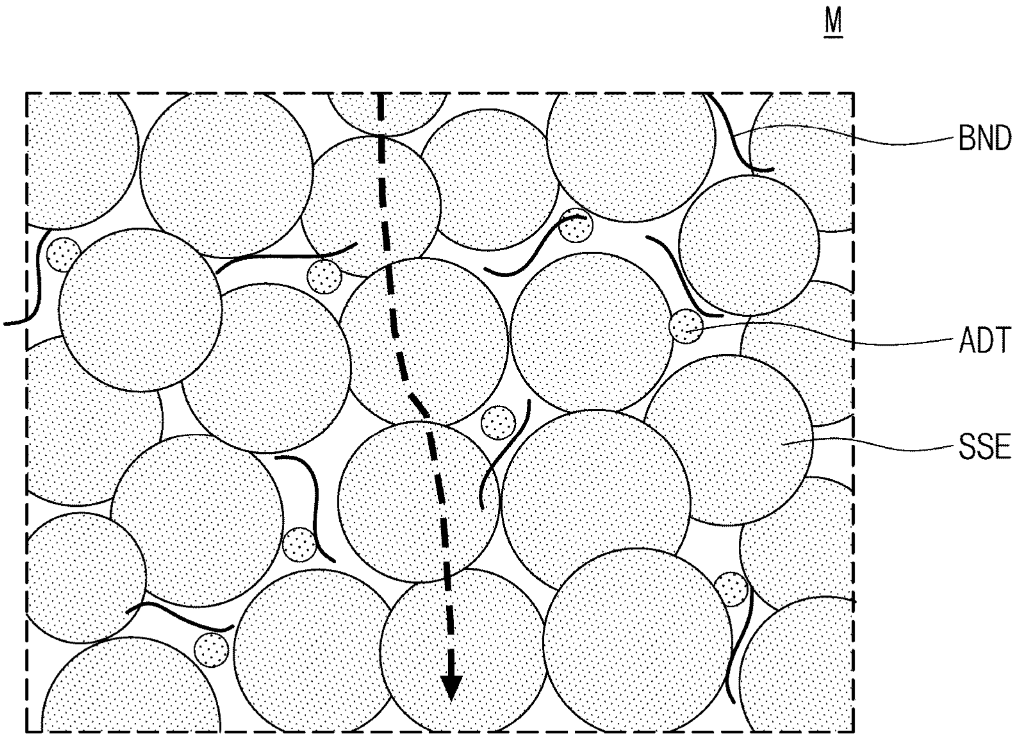

FIG. 3

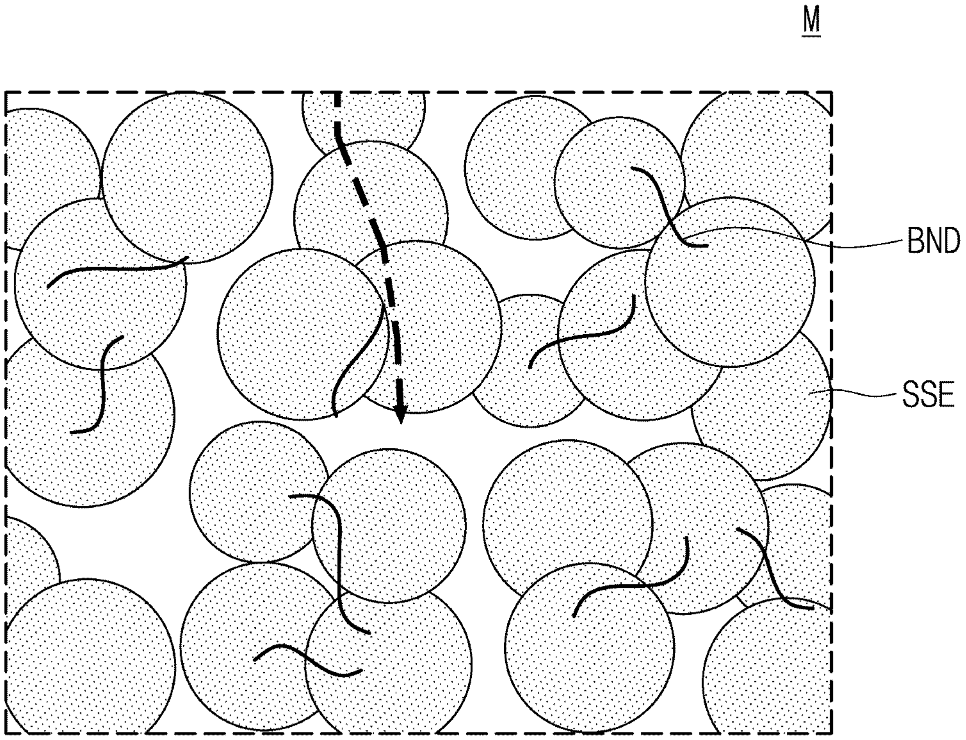

FIG. 4

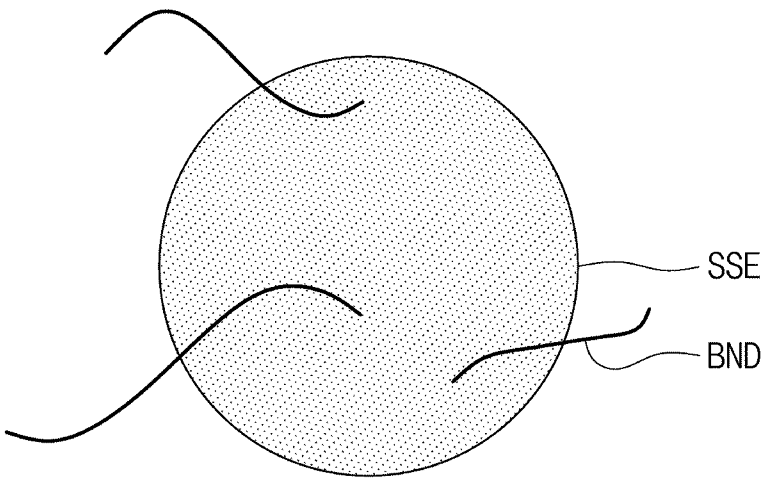


FIG. 5

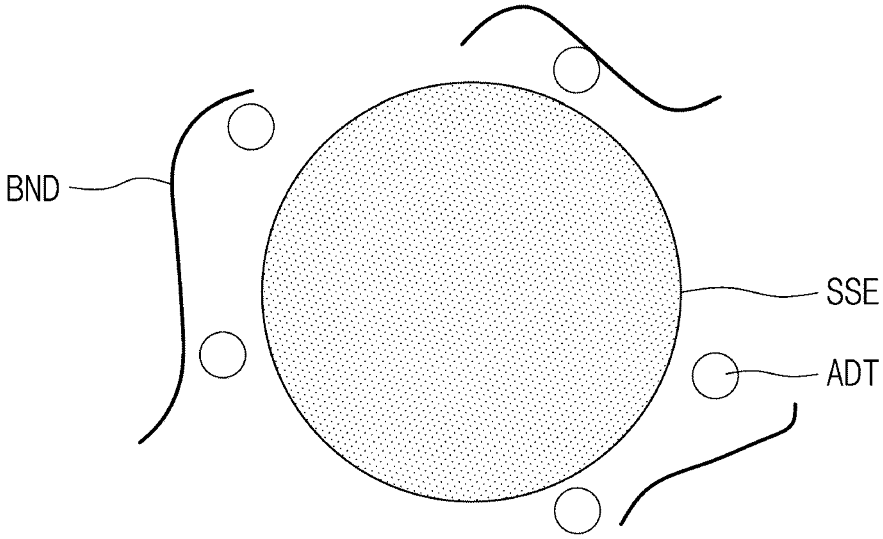

FIG. 6

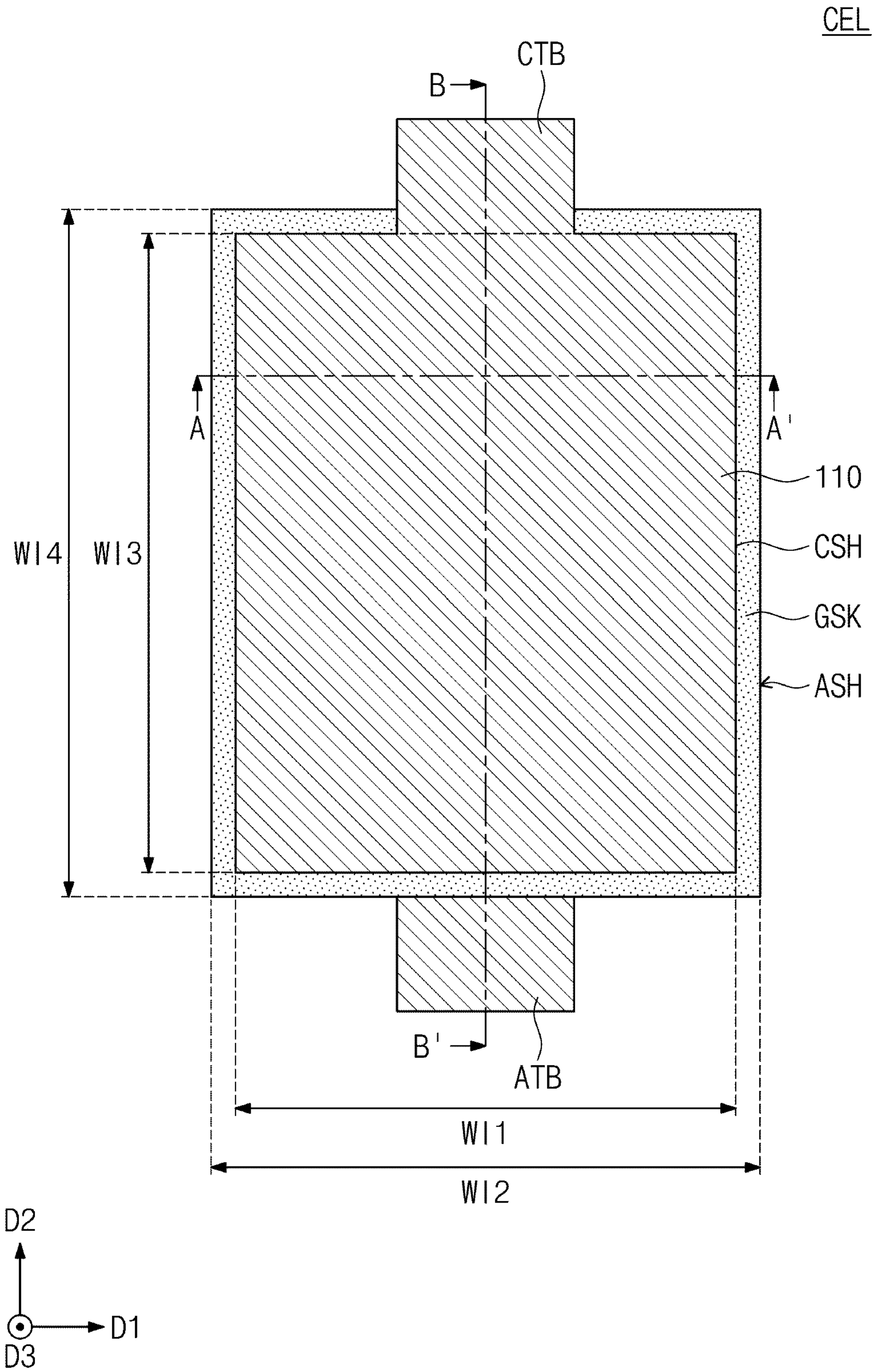

FIG. 7A

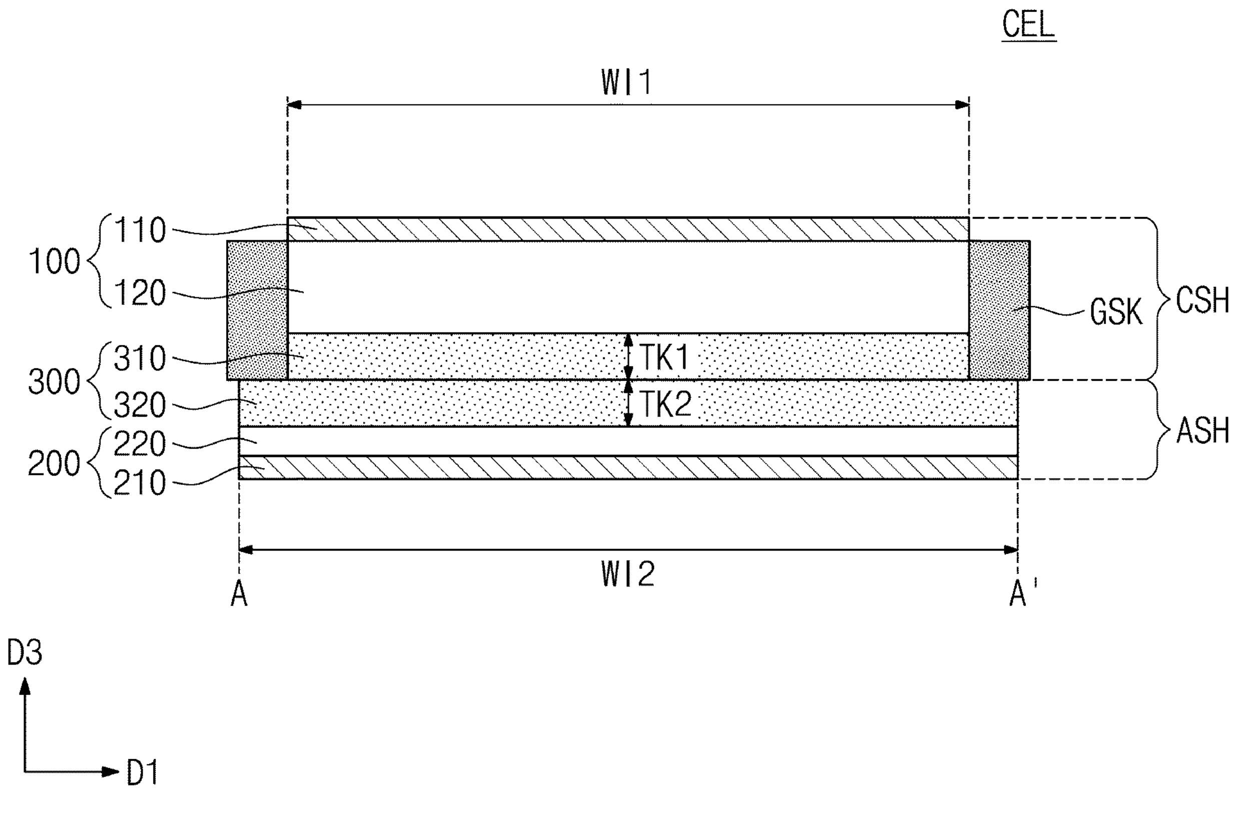
CEL
WI1
100
110
120
300
310
320
200
220
210
TK1
TK2
GSK
CSH
ASH
WI2
A
A'
D3
D1

FIG. 7B

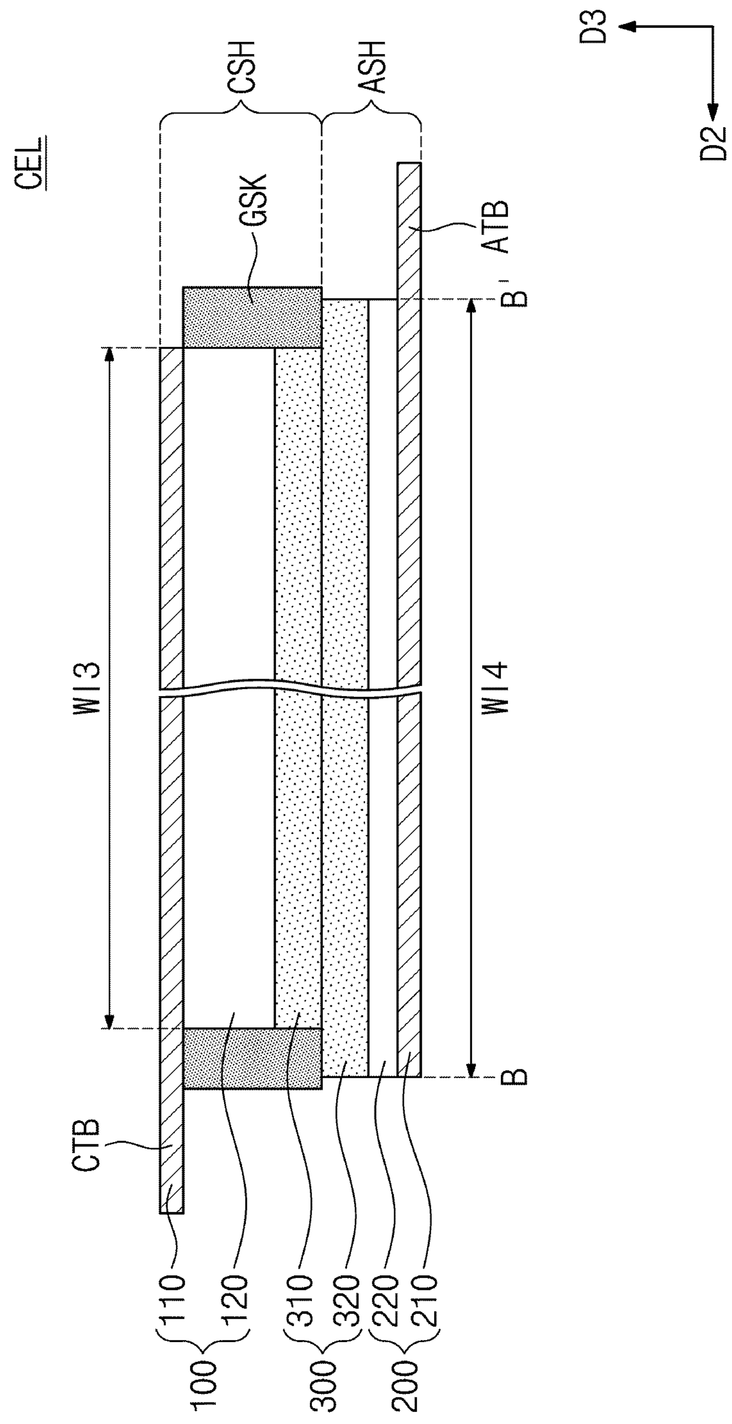
CEL
CSH
ASH
GSK
ATB
CTB
B'
B
W13
W14
D3
D2
110
120
310
320
220
210
100
300
200

FIG. 8

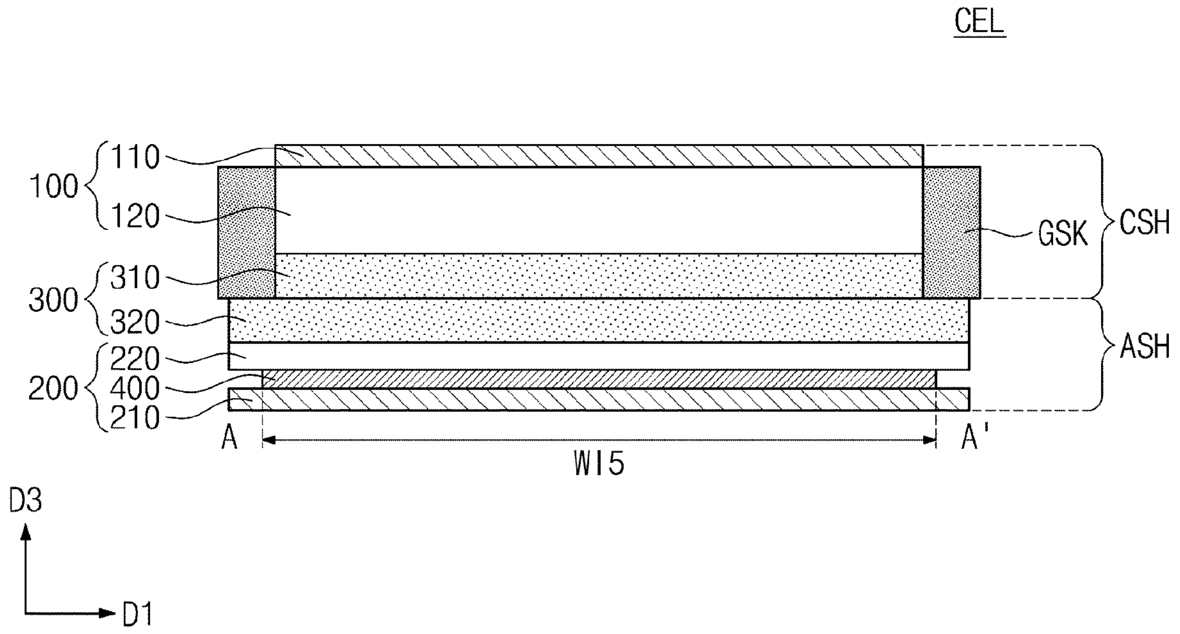
CEL
100
110
120
300
310
320
200
220
400
210
GSK
CSH
ASH
A
A'
WI5
D3
D1

FIG. 9

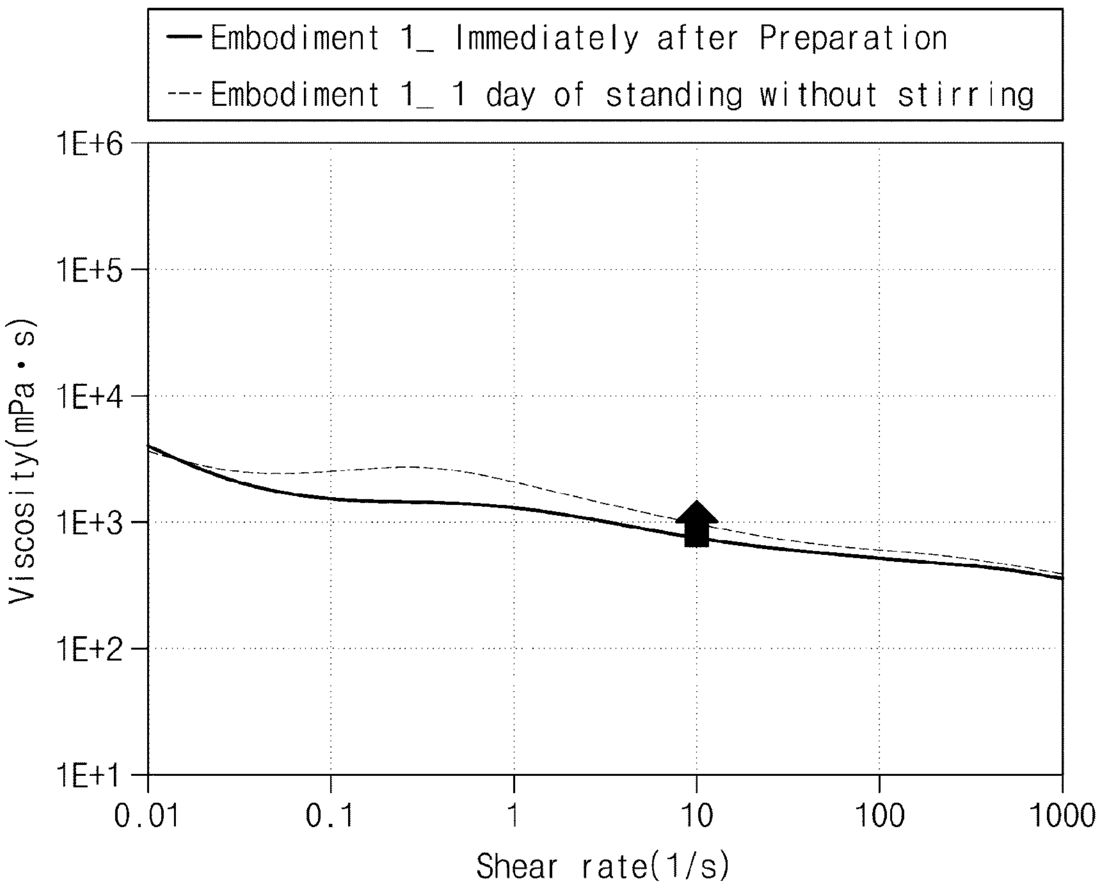
Embodiment 1_ Immediately after Preparation
Embodiment 1_ 1 day of standing without stirring
Viscosity(mPa·s)
1E+6
1E+5
1E+4
1E+3
1E+2
1E+1
0.01
0.1
1
10
100
1000
Shear rate(1/s)

FIG. 10

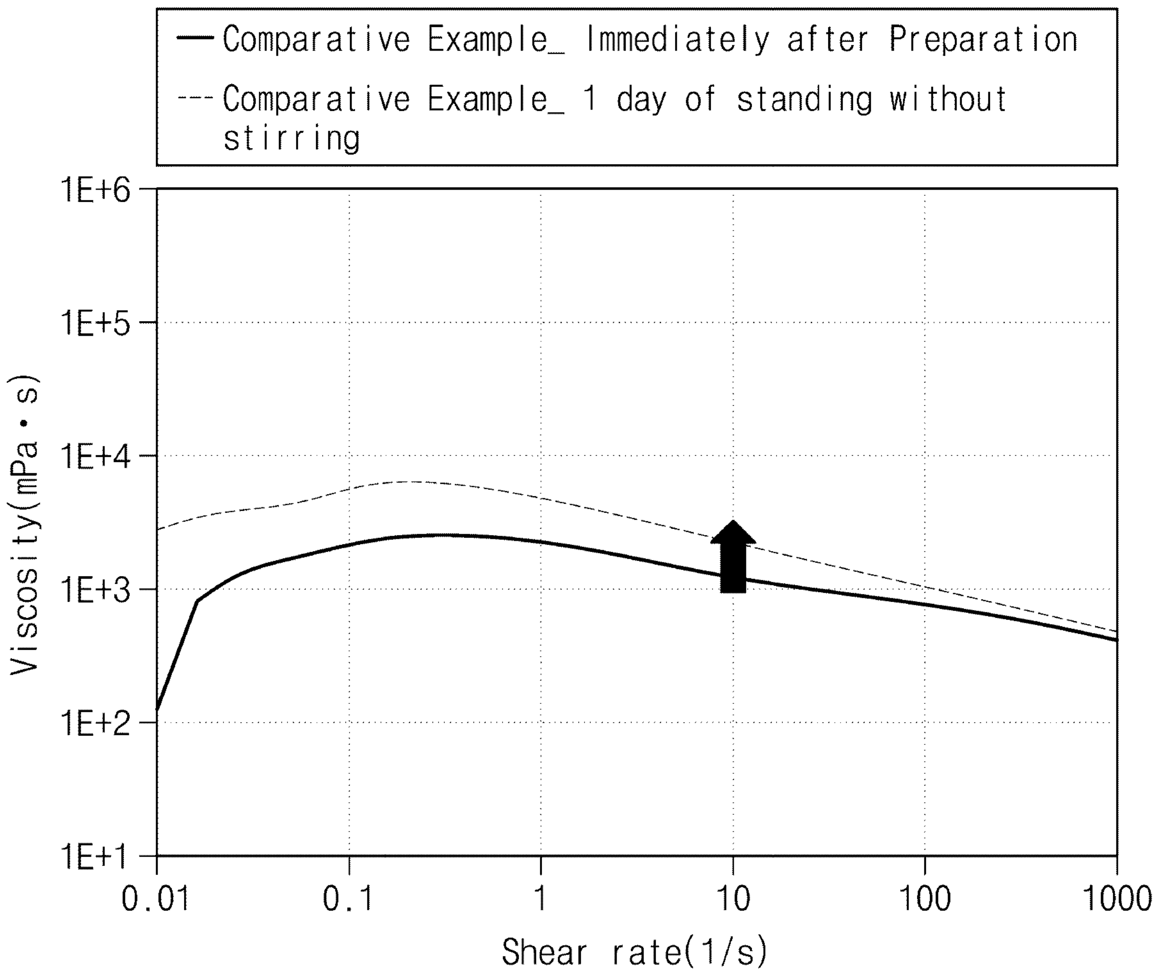
Comparative Example_ Immediately after Preparation
Comparative Example_ 1 day of standing without stirring
1E+6
1E+5
1E+4
1E+3
1E+2
1E+1
Viscosity(mPa・s)
0.01
0.1
1
10
100
1000
Shear rate(1/s)

FIG. 11A

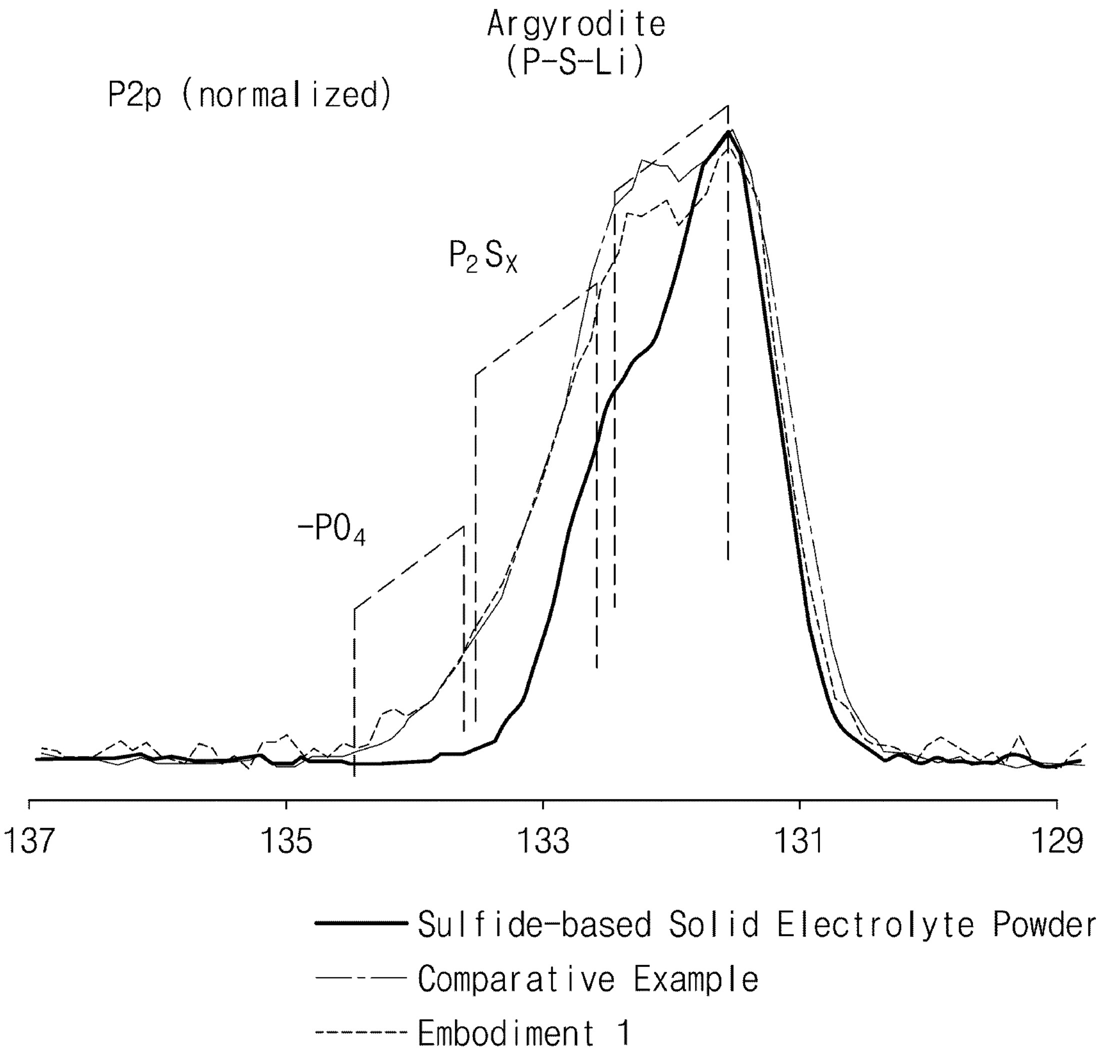
Argyrodite
(P-S-Li)
P2p (normalized)
$P_2S_X$
$-PO_4$
137
135
133
131
129
Sulfide-based Solid Electrolyte Powder
Comparative Example
Embodiment 1

FIG. 11B

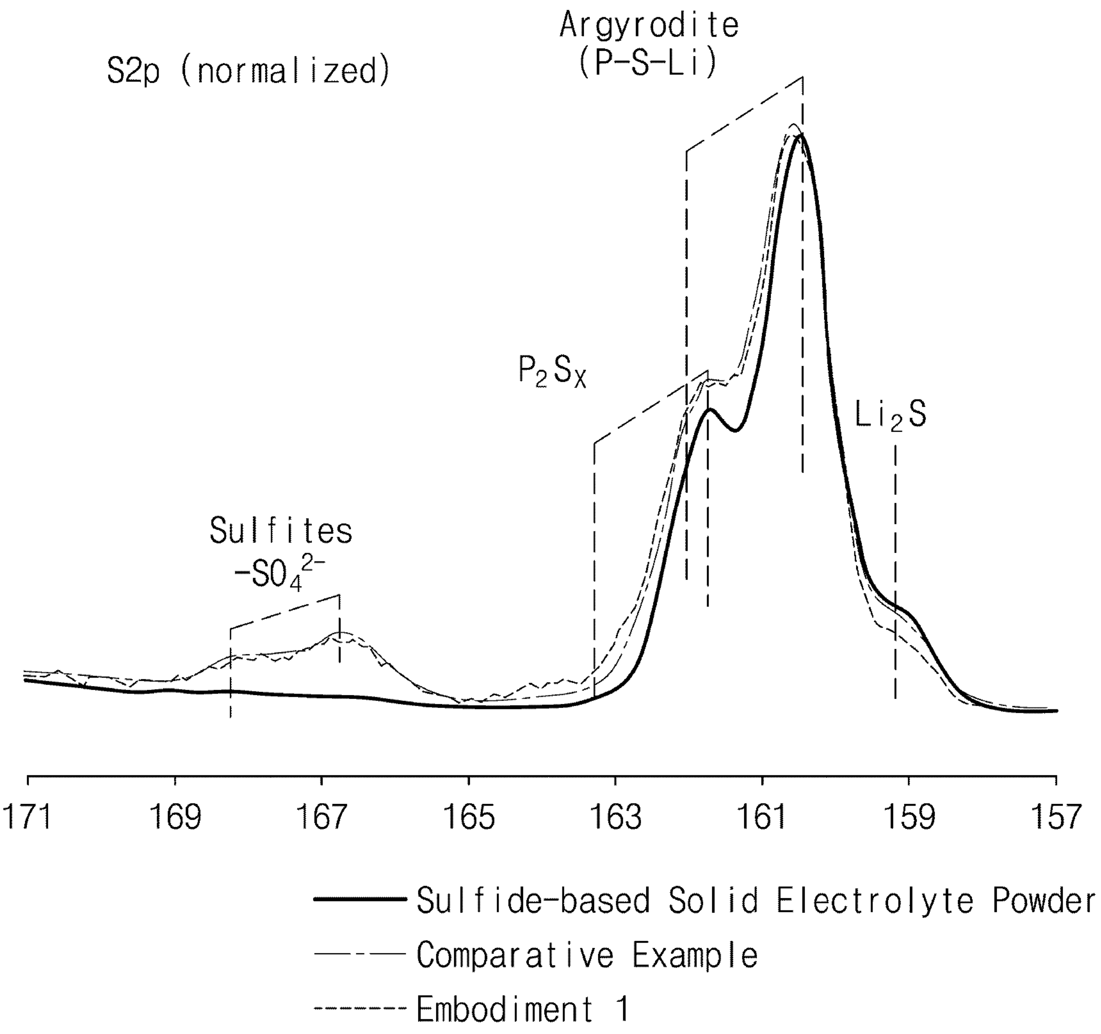
S2p (normalized)
Argyrodite
(P-S-Li)
$P_2S_X$
$Li_2S$
Sulfites
$-SO_4^{2-}$
171
169
167
165
163
161
159
157
Sulfide-based Solid Electrolyte Powder
Comparative Example
Embodiment 1

FIG. 12

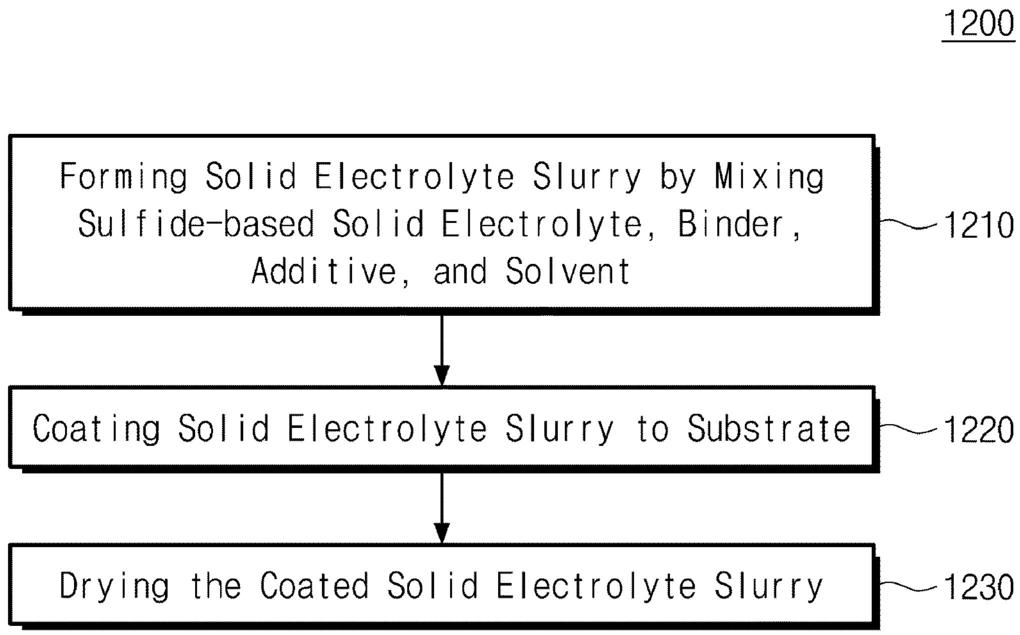
1200
Forming Solid Electrolyte Slurry by Mixing Sulfide-based Solid Electrolyte, Binder, Additive, and Solvent
1210
Coating Solid Electrolyte Slurry to Substrate
1220
Drying the Coated Solid Electrolyte Slurry
1230

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020240199709